(19) Europäisches Patentamt
European Patent Office
Office européen des brevets

(11) **EP 3 078 950 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **15162791.6**

(22) Anmeldetag: **08.04.2015**

(51) Internationale Patentklassifikation (IPC):
**G01J 3/50** $^{(2006.01)}$ **G01J 3/52** $^{(2006.01)}$

(52) Gemeinsame Patentklassifikation (CPC):
**G01J 3/504; G01J 3/524**

(54) **FARBMESSVERFAHREN UND FARBMESSGERÄT**

COLOUR MEASURING METHOD AND COLOUR MEASURING DEVICE

PROCÉDÉ DE MESURE DE LA COULEUR ET COLORIMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.10.2016 Patentblatt 2016/41**

(73) Patentinhaber: **X-Rite Switzerland GmbH**
**8105 Regensdorf (CH)**

(72) Erfinder:
• **Ehbets, Peter**
**8046 Zürich (CH)**

• **Scheller Lichtenauer, Matthias**
**8608 Bubikon (CH)**

(74) Vertreter: **Jonas, Hans-Hermann**
**X-Rite Europe GmbH**
**Althardstrasse 70**
**8105 Regensdorf (CH)**

(56) Entgegenhaltungen:
**EP-A1- 1 914 529        US-A- 4 711 580**
**US-A1- 2011 143 017     US-B1- 6 707 553**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Farbmessverfahren gemäss dem Oberbegriff des unabhängigen Anspruchs 1 und ein Farbmessgerät gemäss dem Oberbegriff des unabhängigen Anspruchs 10.

Farbmessgeräte der zur Rede stehenden Art können unabhängig von der zugrundeliegenden Messtechnologie als autonome Geräte oder als Messperipherie zum Einsatz in Verbindung mit einem steuernden und Messdaten auswertenden Rechner ausgebildet sein. Autonome Farbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Farbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Farbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann.

Metallicfarben und Lacke mit Effektpigmenten kommen heutzutage nicht nur in der Automobilindustrie immer mehr zum Einsatz. Solche Farben zeigen eine starke Winkelabhängigkeit. Lacke mit Aluminiumflakes (Plättchen) zeigen zum Beispiel einen starken Helligkeitsflop. Lacke mit Interferenz-Effekt-Pigmenten zeigen dazu auch Farbunterschiede mit geänderter Beobachtungs- oder Beleuchtungsrichtung. Zum Messen solcher Lacke haben sich Mehrwinkelmessgeräte etabliert. Glanzmessung ist ein verwandtes Thema, bei dem das Messresultat ebenfalls winkelsensitiv ist.

Messgeräte, die solche Eigenschaften erfassen können, müssen dazu ausgebildet sein, das Messobjekt unter einer oder mehreren verschiedenen, genau definierten Beleuchtungsrichtungen (nominelle Beleuchtungsrichtungen) zu beleuchten und das vom Messobjekt zurückgestrahlte Licht aus zumindest einer genau definierten Beobachtungsrichtung (nominelle Beobachtungsrichtung) aufzupicken. Beobachtungsrichtung und Beleuchtungsrichtung können gemäss dem Helmholtz Reziprozitäts Theorem ausgetauscht werden. Farbmessgeräte dieser Art sind z.B. in den Dokumenten EP 2 703 789 A1 und EP 2 728 342 A1 in aller Ausführlichkeit beschrieben.

In der Publikation "Geräteprofilierung: Management globaler Farbkonsistenz" von Wilhelm H. Kettler, DFO Tagung Qualitätssicherung und Prüfverfahren 2008, werden verschiedene Ursachen dargelegt, die beim Einsatz solcher Farbmessgeräte zu Messfehlern führen können. Insbesondere gehören dazu die sogenannten systematischen Fehler, die auf gewisse Geräteunzulänglichkeiten wie z.B. fehlerhafte Kalibrierung zurückzuführen sind. In einem von Wilhelm H. Kettler für Farbe und Lack // Seminare Modul 2: Tiefere Einblicke in die Farbmetrik 25.-27. Juni 2014, Stuttgart (FPL) gehaltenen Vortrag mit dem Titel "Farbmanagement" wird insbesondere auch auf die sogenannten Winkelfehler hingewiesen, die sich durch die geometrischen Bedingungen der Beleuchtungs- und Beobachtungsstrahlengänge sowie durch die Aperturen der Beleuchtungs- und Beobachtungsstrahlengänge ergeben können. Winkelfehler, d.h. Abweichungen zwischen realen Beleuchtungs- und Beobachtungsrichtungen des Messgeräts und entsprechenden, durch die gewählte Messgeometrie vorgegebenen nominellen Beleuchtungs- und Beobachtungsrichtungen wirken sich gerade bei der Messung an Proben mit Effektfarben besonders stark aus.

Die vorliegende Erfindung beschäftigt sich in erster Linie mit der Vermeidung bzw. Kompensation oder Korrektur von durch solche Winkelfehler verursachten Messfehlern.

In den Dokumenten EP 2 703 789 A1 und EP 2 728 342 A1 sind Methoden und Massnahmen beschrieben, wie durch Winkelfehler des Messgeräts verursachte Messwertverfälschungen korrigiert werden können. Die dort beschriebenen Massnahmen bedingen jedoch einen höheren apparativen Aufwand zw. eine grössere Komplexität der Messgeräte und sind auch rein verfahrensmässig relativ aufwändig.

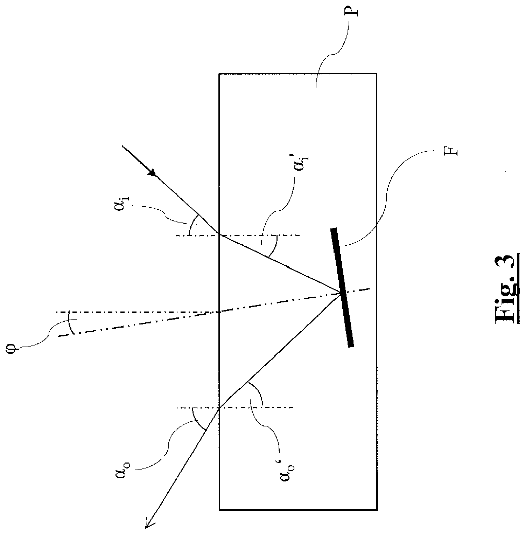

In der Publikation "Making sense of measurement geometries for multi-angle spectrophotometers" von Eric Kirchner und Werner Cramer in Color Research & Application 37.3 (2012), Seiten 186-198 wird ein Formalismus beschrieben, wie paarweise Kombinationen von Beleuchtungsrichtungen und Beobachtungsrichtungen eindeutig eine Richtung zugeordnet wird, in der ein Effektpigmentflake (Plättchen) in einem Lack orientiert sein muss, um die Beleuchtung spekular in Beobachtungsrichtung zu reflektieren. Diese Richtung wird in der Literatur als Flakenormalen-Winkel bezeichnet (vgl. Fig. 3). Die Zuordung dieser Richtung zu einer Beleuchtungs-/Beobachtungsrichtungskombination wird im Folgenden Transformation in den Flakewinkelraum genannt. Die Orientierung des Effektpigmentflakes im Flakewinkelraum, d.h. der Flakenormalen-Winkel kann für mehrere Kombinationen von Beleuchtungsrichtung und Beobachtungsrichtung dieselbe sein.

US 4,711,580 offenbart ein Verfahren zum Untersuchen der Reflektanz metallischer Lacke, bei dem winkelabhängige Messdaten für Lichtreflexionen interpoliert werden.

US 2011/0143017 A1 offenbart ein goniometrisches System Verwendung in robotischen Systemen, mit dem winkelabhängige Reflektanzmessungen korrigiert werden können.

EP 1 914 529 A1 offenbart ein Verfahren zum Analysieren der Farbe und winkelabhängigen Reflektanz eines Objekts, bei dem eine Korrekturmatrix anhand einer Standardoberfläche erstellt wird.

US 6,707,553 B1 offenbart eine Farbmessvorrichtung, die Fehler zwischen benachbarten Werten der für eine Berechnung der Reflexionen verwendeten Gauss-Funktion durch Einfügen von Korrekturbeträgen ausgleicht.

Durch die vorliegende Erfindung soll ein Farbmessverfahren und ein entsprechendes Farbmessgerät der jeweiligen gattungsgemässen Art dahingehend verbessert werden, dass durch Winkelfehler der verschiedenen Messkanäle (Beleuchtung- und Beobachtungsrichtungen) bedingte Messwertverfälschungen auf relativ einfache Weise und ohne zusätzliche Komplexität des Farbmessgeräts korrigiert werden können, so dass die von der jeweiligen Messgeometrie vorgegebenen nominellen Beleuchtungs- und Beobachtungsrichtungen genau eingehalten und dadurch Messwertverfälschungen vermieden werden. Ein weiteres Ziel ist die Übereinstimmung der Messwerte zwischen verschiedenen Farbmessgeräten gleichen Aufbaus zu verbessern.

Diese der Erfindung zugrundeliegende Aufgabe wird durch das durch die Merkmale des unabhängigen Anspruchs 1 gekennzeichnete erfindungsgemässe Farbmessverfahren und das durch die Merkmale des unabhängigen Anspruchs 10 gekennzeichnete erfindungsgemässe Farbmessgerät gelöst. Vorteilhafte Ausgestaltungen und Weiterbildungen des erfindungsgemässen Farbmessverfahrens und des erfindungsgemässen Farbmessgeräts sind Gegenstand der abhängigen Ansprüche. Hinsichtlich des Farbmessverfahrens besteht das Wesen der Erfindung in Folgendem: Bei einem Farbmessverfahren wird mittels eines Farbmessgeräts ein Messfleck eines Messobjekts unter mindestens einer realen Beleuchtungsrichtung des Farbmessgeräts mit Beleuchtungslicht beaufschlagt und es werden spektrale Reflexionsfaktoren des vom Messfleck unter mindestens einer realen Beobachtungsrichtung des Farbmessgeräts zurückgestrahlten Messlichts gemessen. Die gemessenen Reflexionsfaktoren werden hinsichtlich durch Abweichungen der realen Beleuchtungs- und Beobachtungsrichtungen des Farbmessgeräts von durch die Messgeometrie des Farbmessgeräts vorgegebenen nominellen Beleuchtungs- und Beobachtungsrichtungen verursachten Messwertverfälschungen korrigiert. Aus den gemessenen Reflexionsfaktoren und den realen Beleuchtungs- und Beobachtungsrichtungen des Farbmessgeräts wird ein kontinuierliches Korrekturmodell gebildet, welches den Zusammenhang der gemessenen Intensität des vom Messfleck zurückgestrahlten Messlichts mit Veränderungen der Differenz der Beleuchtungs- und Beobachtungsrichtungen darstellt. Die gemessenen Reflexionsfaktoren werden anhand dieses Korrekturmodells unter Einbezug der realen und nominellen Beleuchtungs- und Beobachtungsrichtungen des Farbmessgeräts korrigiert.

Die erfindungsgemässe Berechnung und Anwendung eines Korrekturmodells erlaubt eine relativ einfache Korrektur der durch Winkelfehler bedingten Messwertverfälschungen ohne bauliche Veränderung des eingesetzten Farbmessgeräts. Das Korrekturmodell kann einheitlich für alle Messgeometrien verwendet werden.

In dem Farbmessverfahren wird für jede paarweise Kombination von Beleuchtungs- und Beobachtungsrichtungen aus den gemessenen Reflexionsfaktoren ein realer Helligkeits-Reflexionsfaktor berechnet, und aus diesen realen Helligkeits-Reflexionsfaktoren wird anhand des Korrekturmodells und der realen und nominellen Beleuchtungs- und Beobachtungsrichtungen des Farbmessgeräts je ein nomineller Helligkeits-Reflexionsfaktor berechnet. Die gemessenen Reflexionsfaktoren werden dann anhand der realen Helligkeits-Reflexionsfaktoren und der nominellen Helligkeits-Reflexionsfaktoren korrigiert.

Gemäss einer besonders vorteilhaften Ausgestaltung werden die realen und die nominellen Beleuchtungs- und Beobachtungsrichtungen des Farbmessgeräts in Flakenormalen-Winkel transformiert und das Korrekturmodell und die nominellen Helligkeits-Reflexionsfaktoren ($R(\varphi_{ni})$) werden im Raum der Flakenormalen-Winkel berechnet. Zweckmässigerweise werden dabei die nominellen Helligkeits-Reflexionsfaktoren aus dem jeweiligen Residuum zwischen den realen Helligkeits-Reflexionsfaktoren und dem Korrekturmodell berechnet.

Vorteilhafterweise werden die gemessenen Reflexionsfaktoren anhand der Differenz zwischen den realen Helligkeits-Reflexionsfaktoren und den nominellen Helligkeits-Reflexionsfaktoren korrigiert.

Für die Berechnung des Korrekturmodells wird vorteilhafterweise der Messfleck des Messobjekts unter mindestens drei, vorzugsweise mindestens fünf unterschiedlichen realen Beleuchtungsrichtungen mit Beleuchtungslicht beaufschlagt. Desgleichen ist es vorteilhaft, wenn das vom Messfleck zurückgestrahlte Messlicht unter mindestens zwei unterschiedlichen realen Beobachtungsrichtungen erfasst und gemessen wird.

In einer vorteilhaften Abwandlung des erfindungsgemässen Farbmessverfahrens werden für die Korrektur der gemessenen Reflexionsfaktoren als nominelle Beleuchtungs- und Beobachtungsrichtungen die realen Beleuchtungs- und Beobachtungsrichtungen eines Ziel-Farbmessgeräts gleicher Messgeometrie verwendet. Dadurch kann das eingesetzte Farbmessgerät bezüglich der Messergebnisse mit dem Ziel-Farbmessgerät in Übereinstimmung gebracht werden.

Hinsichtlich des Farbmessgeräts besteht das Wesen der Erfindung in Folgendem: Ein Farbmessgerät weist eine Messanordnung auf, die mindestens eine Beleuchtungsanordnung zur Beaufschlagung eines Messflecks eines Messobjekts mit Beleuchtungslicht in je einer realen Beleuchtungsrichtung und mindestens eine Aufpickanordnung zur Erfassung des vom Messfleck unter einer realen Beobachtungsrichtung zurückgestrahlten Messlichts und zur Umwandlung desselben in spektrale Reflexionsfaktoren sowie eine rechnerbasierte Steuerung für die mindestens eine Beleuchtungsanordnung und die mindestens eine Aufpickanordnung und für die Verarbeitung der von der mindestens einen Aufpickanordnung erzeugten Reflexionsfaktoren umfasst. Das Farbmessgerät weist ferner Mittel auf, um die gemessenen Reflexionsfaktoren hinsichtlich durch Abweichungen der realen Beleuchtungs- und Beobachtungsrichtungen des Farbmessgeräts von durch die Messgeometrie des Farbmessgeräts vorgegebenen nominellen Beleuchtungs- und Beobachtungsrichtungen verursachte Messwertverfälschungen zu korrigieren. Die Steuerung ist dazu ausgebildet, aus den gemessenen Reflexionsfaktoren und den realen Beleuchtungs- und Beobachtungsrichtungen des Farbmessgeräts ein kontinuierliches Korrekturmodell zu bilden, welches den Zusammenhang der gemessenen Intensität des vom Messfleck zurückgestrahlten Messlichts mit Veränderungen der Differenz der Beleuchtungs- und Beobachtungsrichtungen darstellt. Die Steuerung ist ferner dazu ausgebildet, die gemessenen Reflexionsfaktoren anhand dieses Korrekturmodells unter Einbezug der nominellen Beleuchtungs- und Beobachtungsrichtungen des Farbmessgeräts zu korrigieren.

Dabei ist die Steuerung dazu ausgebildet, für jede paarweise Kombination von Beleuchtungs- und Beobachtungsrichtungen aus den gemessenen Reflexionsfaktoren einen die Intensität repräsentierenden realen Helligkeits-Reflexionsfaktor und aus den realen Helligkeits-Reflexionsfaktoren anhand des Korrekturmodells und der nominellen Beleuchtungs- und Beobachtungsrichtungen des Farbmessgeräts je einen nominellen Helligkeits-Reflexionsfaktor zu berechnen.

Ausserdem ist die Steuerung dazu ausgebildet, die gemessenen Reflexionsfaktoren anhand der realen Helligkeits-Reflexionsfaktoren und der nominellen Helligkeits-Reflexionsfaktoren zu korrigieren.

Vorteilhafterweise ist die Steuerung dabei dazu ausgebildet, die realen und die nominellen Beleuchtungs- und Beobachtungsrichtungen des Farbmessgeräts in Flakenormalen-Winkel zu transformieren und das Korrekturmodell und die nominellen Helligkeits-Reflexionsfaktoren im Raum der Flakenormalen-Winkel zu berechnen. Zweckmässigerweise ist die Steuerung ferner dazu ausgebildet, die nominellen Helligkeits-Reflexionsfaktoren aus dem jeweiligen Residuum zwischen den realen Helligkeits-Reflexionsfaktoren und dem Korrekturmodell zu berechnen.

Zweckmässigerweise ist die Steuerung ferner dazu ausgebildet, die gemessenen Reflexionsfaktoren anhand der Differenz zwischen den realen Helligkeits-Reflexionsfaktoren und den nominellen Helligkeits-Reflexionsfaktoren zu korrigieren.

Vorteilhafterweise weist das Farbmessgerät mindestens drei, vorzugsweise mindestens fünf Beleuchtungsanordnungen zur Beleuchtung des Messflecks unter verschiedenen realen Beleuchtungsrichtungen auf. Vorteilhafterweise weist das Farbmessgerät ferner mindestens zwei Aufpickanordnungen zur Erfassung des Messlichts aus unterschiedlichen realen Boebachtungsrichtungen auf.

Im Folgenden wird die Erfindung anhand der Zeichnung näher erläutert. Es zeigen:

Fig. 1     eine etwas vereinfachte Darstellung des grundsätzlichen Aufbaus eines Ausführungsbeispiels des erfindungsgemässen Farbmessgeräts,

Fig. 2     ein Blockschema der rechnerbasierten Steuerung des Farbmessgeräts,

Fig. 3     eine schematische Skizze zur Erläuterung des Flakenormalen-Winkels,

Fig. 4     ein Beispiel einer im erfindungsgemässen Farbmessverfahren benutzten Korrekturfunktion,

Fig. 5     eine Skizze zur Erläuterung der im erfindungsgemässen Farbmessverfahren benutzten Winkel korrektur und

Fig. 6     ein Blockschema der wichtigsten Schritte des erfindungsgemässen Farbmessverfahrens.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen, Unter "Messanordnung" wird die Gesamtheit derjenigen Komponenten des Farbmessgeräts verstanden, welche zur Beleuchtung eines Messflecks auf der Oberfläche eines Messobjekts und zur Erfassung des von diesem Messfleck zurückgestrahlten Lichts und zur Umwandlung desselben in korrespondierende elektrische Signale dienen. Unter "Gerätenormale" ist eine gerätefeste (gedachte) Linie zu verstehen, die beim praktischen Einsatz des Farbmessgeräts (idealerweise) senkrecht auf die Oberfläche des Messobjekts steht und den Mittelpunkt des Messflecks definiert. Unter "realer Beleuchtungsrichtung" ist die Richtung zu verstehen, in welcher der Messfleck beleuchtet wird. Analog ist unter "realer Beobachtungsrichtung" die Richtung zu verstehen, aus welcher das vom Messfleck zurückgestrahlte Messlicht aufgepickt wird. Unter "nominellen Beleuchtungsrichtungen" und "nominellen Beobachtungsrichtungen" sind diejenigen Beleuchtungs- bzw. Beobachtungsrichtungen zu verstehen, für welche das Farbmessgerät entsprechend seiner zugrundeliegenden Messgeometrie ausgelegt ist. Die tatsächlichen realen Beleuchtungs- und Beobachtungsrichtungen können z.B. aufgrund von Fertigungstoleranzen von den nominellen Beleuchtungs- und Beobachtungsrichtungen (geringfügig) abweichen. Unter "spekularer Richtung" ist die an der Oberfläche des (ebenen) Messobjekts gespiegelte nominelle Beobachtungsrichtung zu verstehen. Ein Mehrwinlcel-Farbmessgerät hat mehrere reale Beleuchtungsrichtungen (und ggf. auch mehrere reale Beobachtungsrichtungen). Unter "Messebene" ist eine durch die Gerätenormale und alle Beleuchtungsrichtungen und die Beobachtungsrichtung(en) sowie die spekulare Richtung verlaufende Ebene zu verstehen. Alle realen und nominellen Winkelangaben beziehen sich auf innerhalb der Messebene liegende Richtungen.

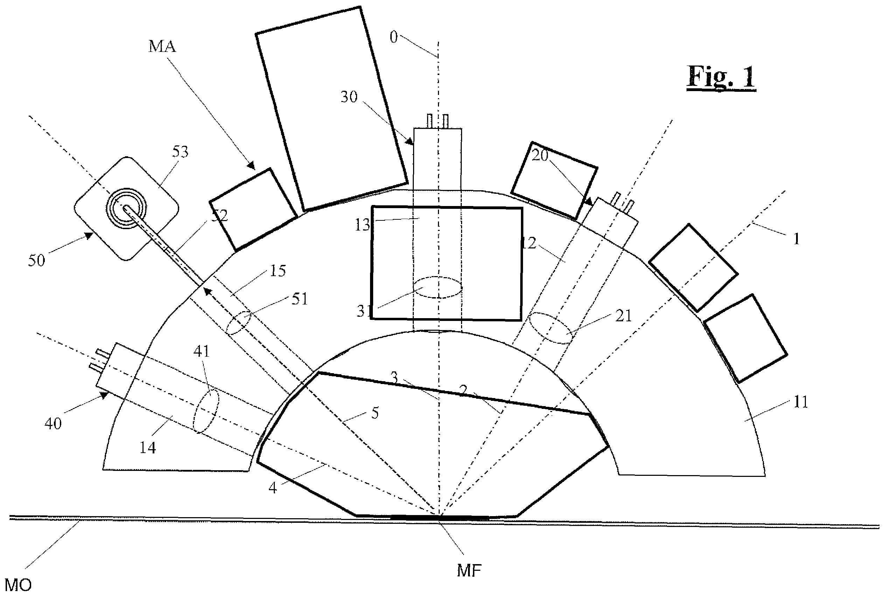

In seiner generellen Konzeption ist das erfindungsgemässe Farbmessgerät weitestgehend ähnlich aufgebaut wie die in den eingangs erwähnten Dokumenten EP 2 703 789 A1 und EP 2 728 342 A1 offenbarten Geräte. Es umfasst ein Gehäuse, das eine Messanordnung und eine elektronische Steuerung aufnimmt. An der Vorderseite des Gehäuses ist eine Anzeigeanordnung vorgesehen. Ferner sind an der Oberseite des Gehäuses Bedienungsorgane angeordnet. Seitlich am Gehäuse befindet sich eine Schnittstelle (vorzugsweise USB) zum Anschluss des Geräts an einen externen Rechner. An der Unterseite weist das Gehäuse eine Messöffnung auf, durch welche Belcuchttmgslicht aus dem Gehäuseinneren austreten und umgekehrt Messlicht von aussen in das Gehäuseinnere eintreten kann (vgl. Fig. 1 der EP 2 728 342 A1).

Die grundsätzliche Ausbildung der im Gehäuse befindlichen Messanordnung geht aus der Figur 1 hervor. Die als Ganze mit MA bezeichnete Messanordnung umfasst einen ortsfest im Gehäuse befestigten Bogenkörper 11, in dem alle optischen bzw. photoelektrischen Komponenten der Messanordnung MA in im gezeigten Ausführungsbeispiel vier durchgehenden Kammern 12, 13, 14 und 15 angeordnet sind. Im gezeigten Ausführungsbeispiel bestehen diese Komponenten aus drei Beleuchtungsanordnungen 20, 30 und 40 und einer Aufpickanordnung 50 mit einem Spektrometer 53, dem das Messlicht über eine Linse 51 und einen Lichtleiter 52 zugeführt wird. Das Spektrometer 53 selbst befindet sich ausserhalb der Kammer 15. Den drei Beleuchtungsanordnungen 20, 30 und 40 ist je eine Linse 21, 31 bzw. 41 zugeordnet. Die drei Beleuchtungsanordnungen 20, 30 und 40, die typischerweise je eine mindestens eine oder mehrere Leuchtdioden mit unterschiedlichen Emissionsspektren umfassende Lichtquelle aufweisen, beleuchten über die zugeordneten Linsen 21, 31 und 41 einen Messfleck MF auf einem Messobjekt MO jeweils mit parallelen Strahlenbündeln. Die Beleuchtungsanordnungen 20, 30 und 40 sind je unter einer realen Beleuchtungsrichtung 2, 3 bzw. 4 ausgerichtet, wobei diese realen Beleuchtungsrichtungen idealerweise mit den durch die zugrundegelegte Messgeometrie vorgegebenen nominellen Beleuchtungsrichtungen übereinstimmen, in der Praxis jedoch aufgrund von Fertigungstoleranzen eine (meist sehr kleine aber nicht vernachlässigbare) Abweichung von den nominellen Beleuchtungsrichtungen aufweisen. Die Aufpickanordnung ist unter einer realen Beobachtungsrichtung 5 ausgerichtet, die ebenfalls idealerweise mit der durch die zugrunde gelegte Messgeometrie vorgegebenen nominellen Beobachtungsrichtung übereinstimmt, in der Praxis jedoch aufgrund von Fertigungstoleranzen eine (meist sehr kleine aber nicht vernachlässigbare) Abweichung von der nominellen Beobachtungsrichtung aufweist. Die gesamte Messanordnung MA ist so getroffen, dass sich die Beleuchtungsrichtungen und die Beobachtungsrichtung in einer gemeinsamen Messebene befinden, welche auch eine mit 0 bezeichnete Gerätenormale enthält. Ferner enthält die Messebene auch eine spekulare Richtung 1, von der weg als Bezugsrichtung konventionellerweise die Winkellagen der Beobachtungsrichtungen 2, 3 und 4 und der Beobachtungsrichtung 5 gemessen werden. Das dargestellte Ausführungsbeispiel weist eine Messgeometrie auf, bei der die drei (nicht dargestellten) nominellen Beobachtungsrichtungen in einem Winkel von 15°, 45° bzw. 110° zur spekularen Richtung 1 verlaufen, wobei die zweite nominelle Beleuchtungsrichtung mit der Gerätenormalen 0 zusammenfällt. Die (ebenfalls nicht dargestellte) nominelle Beobachtungsrichtung verläuft im dargestellten Ausführungsbeispiel in einem Winkel von 90° zur spekularen Richtung 1.

Die Linsen 21, 31, 41 und 51 können auch ganz oder teilweise entfallen. Ebenso ist die Beleuchtung mit parallelem Licht nicht zwingend.

Die Messanordnung MA kann auch weniger oder mehr Beleuchtungsanordnungen sowie auch mehr als eine Aufpickanordnung aufweisen, so wie dies etwa bei dem im Dokument EP 2 728 342 A1 beschriebenen Farbmessgerät der Fall ist.

Im gezeigten Ausführungsbeispiel sind die Beleuchtungs- und Beobachtungsstrahlengänge geradlinig ausgebildet. Es ist jedoch auch möglich, z.B. aus Platzgründen, einen oder mehrere der Strahlengänge abzuknicken, also z.B. mittels Spiegel umzulenken. Wesentlich ist lediglich, dass die optischen Achsen der Strahlengangabschnitte, welche unmittelbar zum Messfleck hin bzw. von diesem weg führen, in einer gemeinsamen Messebene liegen.

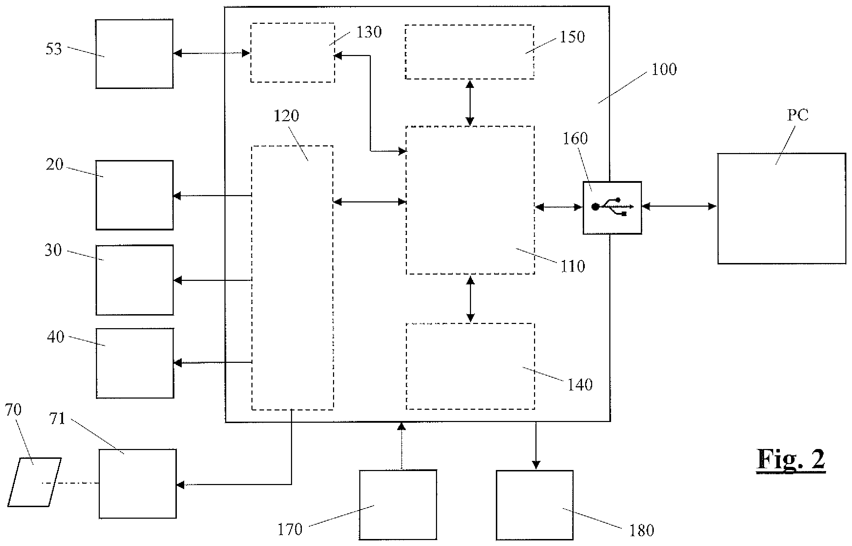

Die Beleuchtungsanordnungen 20, 30 und 40 werden von einer rechnerbasierten Steuerung 100 gesteuert (Fig. 2). Letztere steuert auch die Aufpickanordnung 50 bzw. deren Spektrometer 53 und verarbeitet dessen Messsignale. Die Steuerung 100 kann Messergebnisse auf der Anzeigeanordnung anzeigen und Bedienungsbefehle von den Bedienungsorganen entgegennehmen. Ferner kann sie über die erwähnte Schnittstelle mit einem externen Rechner PC kommunizieren, insbesondere Messdaten übertragen und Befehle und Steuerdaten entgegennehmen. Näheres dazu ist weiter unten im Zusammenhang mit Fig. 2 erläutert.

Bevor das Farbmessgerät einsatzbereit ist, wird es zunächst in an sich bekannter Weise anhand von Dunkelmessungen und Messungen an einer Weisskachel (Weiss-Referenz) kalibriert. Die Messungen an der Weisskachel werden dabei für jede Beleuchtungsanordnung und Aufpickanordnung separat durchgeführt.

Der Messvorgang erfolgt wie bei den bekannten Farbmessgeräten dieser Art prinzipiell so, dass - separat für jeden Beleuchtungskanal (Beleuchtungsanordnungen 20, 30, 40) - mittels der Aufpickanordnung 50 ein vollständiges Spektrum mit einer Vielzahl von Stützpunkten (Wellenlängenbereichen von je z.B. 10..20 nm Breite) über den interessierenden Wellenlängenbereich (meist sichtbares Spektrum plus nahes UV) aufgenommen wird. Dazu wird das Spektrometer 53 von der Steuerung 100 für ein gewisses Zeitfenster aktiviert (in Messbereitschaft versetzt) und die Lichtquelle der jeweiligen Beleuchtungsanordnung wird innerhalb dieses Zeitfensters für eine bestimmte Zeitdauer aktiviert bzw. eingeschaltet. Das Zeitfenster entspricht der Integrationszeit des Spektrometers.

In Fig. 2 ist das Zusammenwirken der einzelnen Komponenten des erfindungsgemässen Farbmessgeräts blockschematisch dargestellt. Die schon erwähnte rechnerbasierte Steuerung 100 umfasst als wichtigste Funktionseinheiten einen Microcontroller 110, eine Hardware-Steuerstufe 120, eine Spektrometer-Steuerstufe 130, einen Programm- bzw. Firmwarespeicher 140, einen Datenspeicher 150, eine USB-Schnittstelle 160, Bedienungsorgane 170 und eine Anzeigeanordnung 180, wobei der Microcontroller 110 das Ganze koordiniert und steuert und auch für die Kommunikation mit einem über die USB-Schnittstelle 160 angeschlossenen externen Rechner PC zuständig ist.

Die Hardware-Steuerstufe 120 steuert die Beleuchtungsanordnungen 20, 30, 40 an, d.h. schaltet die in diesen enthaltenen Lichtquellen ein bzw. aus. Zusätzlich steuert die Hardware-Steuerstufe 120 noch einen im Farbmessgerät angeordneten Antrieb 71, mit welchem eine ebenfalls im Farbmessgerät vorgesehene Weiss-Kachel 70 in den Messstrahlengang des Farbmessgeräts eingebracht bzw. wieder aus diesem entfernt werden kann.

Die Spektrometer-Steuerstufe 130 aktiviert das Spektrometer 53 und liest die von diesem erzeugten Messdaten aus, bereitet sie auf und wandelt sie in digitale Messsignale (spektrale Reflexionsfaktoren) um.

Der (nicht-flüchtige) Programmspeicher 140 enthält die für die Steuerung und Datenaufbereitung erforderliche Firmware bzw. Software. Falls das Farbmessgerät als Peripherie für einen übergeordneten Rechner ausgelegt ist, können die Programme für die Steuerung und die Datenaufbereitung alternativ ganz oder teilweise auch auf dem externen Rechner laufen.

Der (nicht-flüchtige) Datenspeicher 150 enthält im Wesentlichen gerätespezifische Parameter wie z.B. Integrationsdauern für das Spektrometer und Aktivierungszeitdauern für die einzelnen Beleuchtungsanordnungen sowie weitere für das weiter unten beschriebene Farbmess- bzw. Korrekturverfahren erforderliche Daten.

Soweit entspricht das beschriebene Farbmessgerät im Grundsatz den in den Dokumenten EP 2 703 789 A1 und EP 2 728 342 A1 offenbarten Farbmessgeräten dieser Art, so dass der Fachmann diesbezüglich keiner weiteren Erläuterung bedarf.

Die vorliegende Erfindung befasst sich nicht mit der grundsätzlichen Messtechnologie als solcher und der Auswertung der Messergebnisse, sondern mit der Problematik der durch Ausrichtungs- bzw. Winkelfehler insbesondere der Beleuchtungsanordnungen verursachten Verfälschung der Messergebnisse (gegenüber einem idealen Gerät mit exakt nominell ausgerichteten Beleuchtungs- und Beobachtungsrichtungen). Im Folgenden wird darauf bzw. auf die erfindungsgemässe Elimination bzw. Kompensation solcher Messverfälschungen anhand der Figuren 3-6 näher eingegangen. Dabei wird davon ausgegangen, dass das Farbmessgerät bereits dunkel- und weisskalibriert ist.

Eine wichtige Rolle kommt beim erfindungsgemässen Farbmessverfahren bzw. Farbmessgerät dem schon eingangs erwähnten Flakenormalen-Winkel zu. Der Flakenormalen-Winkel $\varphi$ verknüpft jeweils eine Beleuchtungsrichtung (Einfallswinkel $\alpha_i$) mit einer Beobachtungsrichtung (Beobachtungswinkel $\alpha_o$), so wie dies in Fig. 3 veranschaulicht ist. Mit P ist eine Effektlackschicht bezeichnet, in der sich ein Flake (Plättchen) F befindet. Die Orientierung des Flakes F bzw. der Flakenormalen ist dabei so, dass das unter dem Einfallswinkel eintretende Licht spekular in die Beobachtungsrichtung austritt. Der Flakenormalen-Winkel $\varphi$ lässt sich anhand einfacher geometrischer Überlegungen und anhand der Brechungsgesetze aus der jeweiligen Beleuchtungsrichtung (Einfallswinkel $\alpha_i$) und der jeweiligen Beobachtungsrichtung (Beobachtungswinkel $\alpha_o$) wie folgt berechnen:

$$\varphi = (\alpha_o{}' - \alpha_i{}')/2$$

mit

$$\sin(\alpha_i{}') = \sin(\alpha_i) * n_1/n_2$$

$$\sin(\alpha_o{}') = \sin(\alpha_o) * n_1/n_2$$

worin $n_1$ der Brechungsindex von Luft und $n_2$ der Brechungsindex des (transparenten) Trägermaterials des Effektlacks P ist. Anders ausgedrückt, lässt sich (bei Kenntnis des Brechungsindex $n_2$) jede spezifische Kombination einer Beleuchtungsrichtung (Einfallswinkel $\alpha_i$) und einer Beobachtungsrichtung (Beobachtungswinkel $\alpha_o$) in einen entsprechenden Flakenormalen-Winkel $\varphi$ transformieren.

Gemäss dem wesentlichsten Grundgedanken der Erfindung wird nun diese Transformation in den Flakewinkel-Raum als Ausgangspunkt für die Korrektur der durch Winkelfehler bedingten Messwertverfälschungen benutzt. Vorausgesetzt wird dabei, dass die realen Beleuchtungsrichtungen der Beleuchtungsanordnungen und die reale Beobachtungsrichtung der Aufpickanordnung (oder im Falle mehrerer Aufpickanordnungen die realen Beobachtungsrichtungen) des eingesetzten Farbmessgeräts genau bekannt sind. Diese realen Beleuchtungs- und Beobachtungsrichtungen des konkreten Farbmessgeräts können z.B. herstellerseitig ausgemessen werden, wobei die entsprechenden Daten im Farbmessgerät abgespeichert werden. Die realen Beleuchtungs- und Beobachtungsrichtungen des konkreten Farbmessgeräts können aber auch mittels an sich bekannter Methoden benutzerseitig ausgemessen und abgespeichert werden.

Als erster Schritt des erfindungsgemässen Farbmessverfahrens wird mit dem Farbmessgerät am auszumessenden Messobjekt ein Satz von spektralen Reflexionsfaktoren gemessen, d.h. je ein Spektrum unter allen (paarweisen) Kombinationen von realen Beleuchtungs- und Beobachtungsrichtungen. Die dabei gewonnenen Werte werden im Folgenden als spektrale Rohdaten $R_i(\lambda)$ bezeichnet, worin der Index *i* für je eine spezifische paarweise Kombination von realen Beleuchtungs- und Beobachtungsrichtungen steht.

Für eine geeignete Repräsentation des ganzen Reflexionsspektrums (z.B. der Mittelwerte über alle Wellenlängen) wird für jede spezifische Kombination *i* von realen Beleuchtungs- und Beobachtungsrichtungen je ein die Intensität des Messlichts repräsentierender realer Helligkeits-Reflexionsfaktor $R(\varphi_{ri})$ berechnet.

Das erfindungsgemässe Farbmessverfahren basiert auf der physikalisch begründeten Annahme, dass sich die durch eine Aufpickanordnung gemessene Intensität des von einer bestimmten Beleuchtungsanordnung ausgehenden Lichtes kontinuierlich mit einer Veränderung der Differenz der Beleuchtungs- und Beobachtungsrichtungen verändert. Demzufolge wird aus allen realen Helligkeits-Reflexionsfaktoren und den zugehörigen realen Beleuchtungs- und Beobachtungsrichtungen durch Einpassung ein kontinuierliches parametrisiertes Modell des Intensitätsverlaufs über die Beleuchtungs- und Beobachtungsrichtungen gebildet. Dieses Modell wird im Folgenden als Korrekturmodell oder Korrekturfunktion bezeichnet. Die erste Koordinate der Korrekturfunktion ist durch die Beleuchtungs- und Beobachtungsrichtungen gegeben, und die zweite Koordinate repräsentiert die unter diesen Beleuchtungs- und Beobachtungsrichtungen gemessenen Intensitäten. Die Korrekturfunktion weist jeder Kombination von Beleuchtungsrichtung und Beobachtungsrichtung eindeutig einen (Helligkeits-)Reflexionsfaktor zu. Mithilfe der Korrekturfunktion und des Residuums zwischen gegebenen Punkten bzw. realen Helligkeits-Reflexionsfaktoren und der Korrekturfunktion wird dann jeder Kombination aus nomineller Beleuchtungsrichtung und nomineller Beobachtungsrichtung innerhalb des Definitionsbereichs der Korrekturfunktion eindeutig ein nomineller Helligkeits-Reflektionsfaktor zugewiesen.

In einer bevorzugten Ausführungsform der Erfindung wird die erste Koordinate, also das Argument der Korrekturfunktion, im Flakewinkel-Raum durch den Flakenormalen-Winkel $\varphi$ definiert. Durch die Transformation der Beleuchtungs- und Beobachtungsrichtungen in den Flakewinkel-Raum können Messungen von mehreren Aufpickanordnungen gleichzeitig korrigiert werden. Alternativ zum Flakenormalen-Winkel kann der aspekulare Winkel verwendet werden. Der aspekulare Winkel ist in Luft definiert und berechnet sich für eine Messgeometrie aus der Winkeldifferenz der Beobachtungsrichtung zur Richtung der spekularen Reflexion der Beleuchtung,

Im Folgenden wird die bevorzugte, im Flakewinkel-Raum arbeitende Ausführungsform des erfindungsgemässen Verfahrens konkreter erläutert.

Für jede spezifische Kombination i von realen Beleuchtungs- und Beobachtungsrichtungen wird ein entsprechender realer Flakenormalen-Winkel $\varphi_{ri}$ berechnet. In diese Berechnung geht, wie weiter oben erläutert, der Brechungsindex $n_2$ des Messobjekts ein und müsste daher bekannt sein bzw. gemessen werden. Für die üblichen Effektlacke beträgt der Brechungsindex ca. 1.5. Für Messungen an solchen Effektlacken genügt es mit für die Praxis ausreichender Genauigkeit, wenn mit diesem Wert gerechnet wird. Unter diesen Annahmen können die realen Flakenormalen-Winkel $\varphi_{ri}$ aber auch schon herstellerseitig bzw. vor der eigentlichen Farbmessung bestimmt und im Farbmessgerät abgespeichert werden.

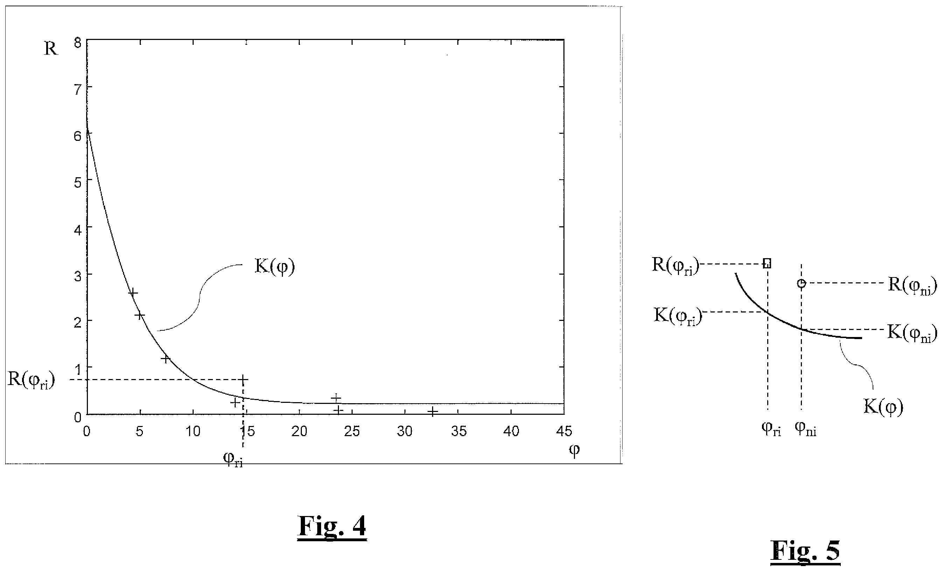

Jeder gemessene (bzw. aus den Messungen berechnete) reale Helligkeits-Reflexionsfaktor $R(\varphi_{ri})$ wird dem entsprechenden berechneten (bzw. abgespeicherten) realen Flakenormalen-Winkel $\varphi_{ri}$ zugeordnet. Diese Zuordnung ist in Fig. 4 grafisch dargestellt, wobei die nicht bezeichneten Kreuze die einzelnen realen Flakenormalen-Winkel und ihre zugeordneten Helligkeits-Reflexionsfaktoren repräsentieren. Die Fig. 4 stellt also die realen Helligkeits-Reflexionsfaktoren im Flakewinkel-Raum dar.

Aus der Fig. 4 ist ersichtlich, dass die Reflexionsfaktoren bei Flakenormalen-Winkeln unter etwa 5° sehr stark ansteigen, während sie bei Flakenormalen-Winkeln über etwa 5° zunächst noch etwas sinken und dann praktisch konstant bleiben. Dementsprechend wirken sich Winkelfehler bei sehr kleinen Flakenormalen-Winkeln wesentlich stärker aus als bei relativ grossen Flakenormalen-Winkeln.

Als nächstes wird aus den realen Helligkeits-Reflexionsfaktoren $R((\varphi_{ri})$ und den zugehörigen realen Flakenormalen-Winkel $\varphi_{ri}$ eine Korrekturfunktion $K(\varphi)$ bestimmt. Die Bestimmung bzw. Einpassung der Korrekturfunktion erfolgt nach irgendeinem an sich bekannten Ausgleichsverfahren so, dass sie möglichst gut mit den durch die realen Helligkeits-Reflexionsfaktoren gegebenen Stützpunkten übereinstimmt. Anhand der so bestimmten Korrekturfunktion $K(\varphi)$ wird dann (in mehreren Schritten) die Korrektur der Rohdaten durchgeführt.

Zunächst wird für jede Kombination i der realen Beleuchtungs- und Beobachtungsrichtungen aus der jeweils zugehörigen Kombination nomineller Beleuchtungs- und Beobachtungsrichtungen ein entsprechender nomineller Flakenormalen-Winkel $(\varphi_{ni}$ berechnet. In diese Berechnung geht wieder der Brechungsindex $n_2$ des Messobjekts ein und müsste daher gemessen werden. Wie bei der Berechnung der realen Flakenormalen-Winkel $\varphi_{ri}$ kann aber auch hier mit für die Praxis ausreichender Genauigkeit ein Wert von 1.5 angenommen werden. Unter diesen Voraussetzungen könnten auch die nominellen Flakenormalen-Winkel $\varphi_{ni}$ schon herstellerseitig bestimmt und im Farbmessgerät abgespeichert werden.

Dann wird aus jedem realen Helligkeits-Reflexionsfaktor R($\varphi_{ri}$) ein nomineller Helligkeits-Reflexionsfaktor R(($\varphi_{ni}$) berechnet. Dies kann mittels der Korrekturfunktion K($\varphi$) z.B. nach der Beziehung

$$R(\varphi_{ni}) = K(\varphi_{ni}) + [R(\varphi_{ri}) - K(\varphi_{ri})]$$

erfolgen, worin K($\varphi_{ni}$) der Wert der Korrekturfunktion K($\varphi$) für den nominellen Flakenormalen-Winkel $\varphi_{ni}$ und K($\varphi_{ri}$) der Wert der Korrekturfunktion K($\varphi$) für den realen Flakenormalen-Winkel $\varphi_{ri}$ ist. Die Fig. 5 veranschaulicht dies. Der Ausdruck [R($\varphi_{ri}$) - K($\varphi_{ri}$)] stellt das Residuum zwischen dem jeweiligen realen Helligkeits-Reflexionsfaktor R($\varphi_{ri}$) und dem Korrekturmodell bzw. der Korrekturfunktion K($\varphi$) dar.

In einer einfacheren Implementierung kann für die Differenz K($\varphi_{ni}$)- K($\varphi_{ri}$) die lokale Steigung der Flakenormalen-Winkel $\varphi_{ni}$ und $\varphi_{ri}$ in der Korrekturfunktion K($\varphi$) von Fig. 4 angenommen werden.

Für die Korrektur der Rohdaten R$_i$($\lambda$) werden dann die so berechneten nominellen Helligkeits-Reflexionsfaktoren R($\varphi_{ni}$) herangezogen, wobei natürlich jedes unter einer spezifischen Kombination i von realen Beleuchtungs- und Beobachtungsrichtungen aufgenommene Spektrum R$_i$($\lambda$) separat anhand des für die jeweilige Kombination berechneten nominellen Helligkeits-Reflexionsfaktors R($\varphi_{ni}$) korrigiert wird.

Die Korrektur der spektralen Rohdaten R$_i$($\lambda$) kann z.B. multiplikativ (durch Skalierung) nach der Formel

$$R_{ik}(\lambda) = R_i(\lambda) * [R(\varphi_{ni}) - R(\varphi_{ri})]/ R(\varphi_{ri})$$

erfolgen, worin R$_{ik}$($\lambda$) die gesuchten winkelkorrigierten Spektraldaten sind.

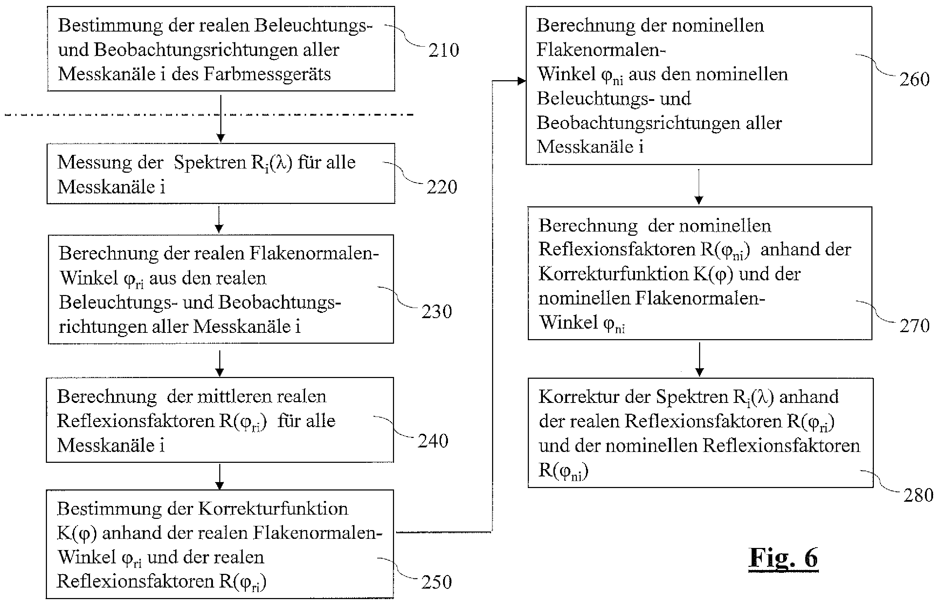

In Fig. 6 sind die wichtigsten Schritte des erfindungsgemässen Farbmessverfahrens noch einmal blockschematisch zusammengefasst. Die einzelnen Verfahrensschritte sind mit 210-280 bezeichnet. Der Verfahrensschritt 210 kann, wie weiter oben erläutert, auch herstellerseitig bzw. ausserhalb des eigentlichen, vom Anwender durchgeführten Farbmessverfahrens erfolgen. Der Verfahrensschritt 230 kann an beliebiger Stelle vor dem Verfahrensschritt 250 erfolgen. Desgleichen kann der Verfahrensschritt 260 an beliebiger Stelle vor dem Verfahrensschritt 270 erfolgen.

Die Messwerte und andere Daten verarbeitenden bzw. berechnenden Verfahrensschritte 220-280 erfolgen unter der Kontrolle der rechnerbasierten Steuerung 100 des erfindungsgemässen Farbmessgeräts. Die dazu erforderlichen Programme sind im Software- bzw. Firmwarespeicher 140 der Steuerung abgelegt und werden vom Microcontroller 110 ausgeführt. Das erfindungsgemässe Farbmessgerät unterscheidet sich von bekannten Geräten dieser Art im Wesentlichen also dadurch, dass es zur Durchführung der beschriebenen Schritte des erfindungsgemässen Verfahrens ausgebildet bzw. programmiert ist.

Das erfindungsgemässe Farbmessverfahren beruht auf einem physikalischen Grundkonzept, nämlich der Kenntnis der realen Beleuchtungs- und Beobachtungsrichtungen der Messkanäle des Messgeräts und der Korrektur der (spektralen) Reflektionsmesswerte der Messkanäle basierend auf der Information der realen Beleuchtungs- und Beobachtungsrichtungen und der durch die Messgeometrie vorgegebenen nominellen Beleuchtungs- und Beobachtungsrichtungen sowie auf einem einheitlichen Korrekturmodell für alle Messgeometrien, welches Korrekturmodell auf den Flakewinkeln basiert. Dies führt zu einer systematischen und plausiblen Messwertkorrektur.

Mit dem erfindungsgemässen Verfahren werden die Messdaten hinsichtlich durch Winkelfehler bedingter Messwertverfälschungen so korrigiert, dass sie mit den von einem idealen, also keine Winkelfehler aufweisenden Farbmessgerät (gleicher Messgeometrie) aufgenommenen Messdaten praktisch exakt übereinstimmen. Die so korrigierten Messdaten entsprechen also denjenigen Messdaten, welche bei exakter Übereinstimmung der realen Beleuchtungs- und Beobachtungsrichtungen gemessen worden wären. Das erfindungsgemässe Verfahren erlaubt aber auch eine relative Korrektur, die die Messdaten an diejenige eines anderen realen, winkelfehlerbehafteten Ziel-Farbmessgeräts (gleicher Messgeometrie) angleicht. Dabei treten an die Stelle der nominellen Beleuchtungs- und Beobachtungsrichtungen des erfindungsgemässen Geräts die (geringfügig fehlerhaft ausgerichteten) realen Beleuchtungs- und Beobachtungsrichtungen des Ziel-Farbmessgeräts. Diese relative Korrektur ist z.B. von Vorteil, wenn bestehende Farbmessgeräte durch neue Farbmessgeräte ergänzt oder ersetzt werden sollen, mittels der bestehenden Farbmessgeräte aber schon eine erhebliche Menge an Messdaten erzeugt worden ist und diese Messdaten auch weiterhin verwendbar sein sollen. In diesen Fällen müssen die neuen Farbmessgeräte zu den bestehenden Farbmessgeräten konsistente Messresultate liefern.

Die Messanordnung MA kann bezüglich Beleuchtungs- und Beobachtungsanordnungen auch umgekehrt ausgebildet sein. Das heisst im konkreten Fall, dass die Beleuchtung des Messobjekts nur unter mindestens einer definierten Beleuchtungsrichtung und dafür die Erfassung des zurückgestrahlten Messlichts mittels dreier (oder mehrerer) Aufpickanordnungen unter drei bzw. mehreren verschiedenen Beobachtungsrichtungen erfolgen würden. Selbstverständlich sind auch beliebige Kombinationen von einer oder mehreren Beleuchtungsanordnungen und einer oder mehreren Aufpickanordnungen möglich.

Das erfindungsgemässe Farbmessverfahren zeigt seine Stärken insbesondere bei Mehrwinkel-Messungen, wo das Messobjekt mit einer grösseren Anzahl von Beleuchtungsanordnungen unter verschiedenen Beleuchtungsrichtungen beleuchtet und das zurückgestrahlte Messlicht von zwei oder mehreren Aufpickan-ordnungen unter verschiedenen Beobachtungsrichtun-gen gemessen wird. Die erfindungsgemässe Verwendung der für alle Messgeometrien einheitlichen Korrekturmethode erhöht die Anzahl effektiver Messwerte für das Korrekturmodell, was eine verbesserte Interpolation der Daten ermöglicht und die Genauigkeit erhöht.

**Patentansprüche**

1. Farbmessverfahren, bei welchem mittels eines Farbmessgeräts ein Messfleck (MF) eines Messobjekts (MO) unter mindestens einer realen Beleuch-tungsrichtung des Farbmessgeräts mit Beleuch-tungslicht beaufschlagt wird und spektrale Reflexi-onsfaktoren ($R_i(\lambda)$) des vom Messfleck (MF) unter mindestens einer realen Beobachtungsrichtung des Farbmessgeräts zurückgestrahlten Messlichts gemessen werden, wobei das Farbmessverfahren aufweist:

   Bilden eines kontinuierliches Korrekturmodells ($K(\varphi)$) aus den gemessenen Reflexionsfaktoren ($R_i(\lambda)$) und den realen Beleuchtungs- und Beo-bachtungsrichtungen des Farbmessgeräts, wo-bei das kontinuierliche Korrekturmodell ($K(\varphi)$) den Zusammenhang der gemessenen Intensität des vom Messfleck zurückgestrahlten Messlichts mit Veränderungen der Differenz der Be-leuchtungs- und Beobachtungsrichtungen dar-stellt,
   **dadurch gekennzeichnet, dass** das Farbmessverfahren ausserdem aufweist:

   Korrigieren der gemessenen Reflexions-faktoren ($R_i(\lambda)$) anhand dieses Korrektur-modells ($K(\varphi)$) unter Einbezug der realen und nominellen Beleuchtungs- und Beobachtungsrichtungen des Farbmessgeräts, so dass die gemessenen Reflexionsfakto-ren ($R_i(\lambda)$) hinsichtlich durch Abweichungen der realen Beleuchtungs- und Beobachtungsrichtungen des Farbmessgeräts von durch die Messgeometrie des Farbmessge-räts vorgegebenen nominellen Beleuch-tungs- und Beobachtungsrichtungen verur-sachten Messwertverfälschungen korrigiert werden,
   wobei für jede paarweise Kombination (i) von Beleuchtungs- und Beobachtungsrich-tungen aus den gemessenen Reflexions-faktoren ($R_i(\lambda)$) ein die Intensität des vom Messfleck zurückgestrahlten Messlichts re-präsentierender realer Helligkeits-Reflexi-onsfaktor ($R((\varphi_{ri})$) berechnet wird,
   wobei aus diesen realen Helligkeits-Refle-xionsfaktoren ($R(\varphi_{ri})$) anhand des Korrekturmodells ($K(\varphi)$) und der realen und nomi-nellen Beleuchtungs- und Beobachtungs-richtungen des Farbmessgeräts je ein no-mineller Helligkeits-Reflexionsfaktor ($R(\varphi_{ni})$) berechnet wird, und
wobei die gemessenen Reflexionsfaktoren ($R_i(\lambda)$) anhand der realen Helligkeits-Refle-xionsfaktoren ($R(\varphi_{ri})$) und der nominellen Helligkeits-Reflexionsfaktoren ($R(\varphi_{ni})$) kor-rigiert werden.

2. Farbmessverfahren nach Anspruch 1, wobei jeder reale Helligkeits-Reflexionsfaktor ($R((\varphi_{ri})$) einen Mit-telwert der gemessenen Reflexionsfaktoren ($R_i(\lambda)$) für die jeweilige paarweise Kombination (i) von Beleuchtungs- und Beobachtungsrichtungen über alle Wellenlängen darstellt.

3. Farbmessverfahren nach Anspruch 1 oder 2, **dadurch gekennzeichnet, dass** die realen und die no-minellen Beleuchtungs- und Beobachtungsrichtun-gen des Farbmessgeräts in Flakenormalen-Winkel ($\varphi$) transformiert werden, und dass das Korrektur-modell ($K(\varphi)$) und die nominellen Helligkeits-Refle-xionsfaktoren ($R(\varphi_{ri})$) im Raum der Flakenormalen-Winkel ($\varphi$) berechnet werden.

4. Farbmessverfahren nach einem der vorhergehenden Ansprüche, **dadurch gekennzeichnet, dass** die nominellen Helligkeits-Reflexionsfaktoren ($R(\varphi_{ni})$) aus dem jeweiligen Residuum zwischen den realen Helligkeits-Reflexionsfaktoren ($R(\varphi_{ri})$) und dem Korrekturmodell ($K(\varphi)$) berechnet werden.

5. Farbmessverfahren nach einem der vorhergehenden Ansprüche, **dadurch gekennzeichnet, dass** die gemessenen Reflexionsfaktoren ($R_i(\lambda)$) anhand der Differenz zwischen den realen Helligkeits-Refle-xionsfaktoren ($R(\varphi_{ri})$) und den nominellen Hellig-keits-Reflexionsfaktoren ($R(\varphi_{ni})$) korrigiert werden.

6. Farbmessverfahren nach einem der vorangehenden Ansprüche, **dadurch gekennzeichnet, dass** der Messfleck (MF) des Messobjekts (MO) unter mindestens drei, vorzugsweise mindestens fünf unter-schiedlichen realen Beleuchtungsrichtungen mit Be-leuchtungslicht beaufschlagt wird.

7. Farbmessverfahren nach einem der vorangehenden Ansprüche, **dadurch gekennzeichnet, dass** das vom Messfleck (MF) zurückgestrahlte Messlicht unter mindestens zwei unterschiedlichen realen Beobachtungsrichtungen erfasst und gemessen wird.

8. Farbmessverfahren nach einem der vorangehenden Ansprüche, **dadurch gekennzeichnet, dass** für alle Messgeometrien ein einheitliches Korrekturmodell ($K(\varphi)$) verwendet wird.

9. Farbmessverfahren nach einem der vorangehenden Ansprüche, **dadurch gekennzeichnet, dass** für die Korrektur der gemessenen Reflexionsfaktoren ($R_i(\lambda)$) als nominelle Beleuchtungs- und Beobachtungsrichtungen die realen Beleuchtungs- und Beobachtungsrichtungen eines Ziel-Farbmessgeräts gleicher Messgeometrie verwendet werden.

10. Farbmessgerät mit einer Messanordnung (MA), die mindestens eine Beleuchtungsanordnung (20, 30, 40) zur Beaufschlagung eines Messflecks (MF) eines Messobjekts (MO) mit Beleuchtungslicht in je einer realen Beleuchtungsrichtung (2, 3, 4) und mindestens eine Aufpickanordnung (50) zur Erfassung des vom Messfleck (MF) unter je einer realen Beobachtungsrichtung (5) zurückgestrahlten Messlichts und zur Umwandlung desselben in spektrale Reflexionsfaktoren ($R_i(\lambda)$) sowie eine rechnerbasierte Steuerung (100) für die mindestens eine Beleuchtungsanordnung und die mindestens eine Aufpickanordnung und für die Verarbeitung der von der mindestens einen Aufpickanordnung erzeugten Reflexionsfaktoren ($R_i(\lambda)$) umfasst,

wobei die Steuerung (100) dazu ausgebildet ist, aus den gemessenen Reflexionsfaktoren ($R_i(\lambda)$) und den realen Beleuchtungs- und Beobachtungsrichtungen des Farbmessgeräts ein kontinuierliches Korrekturmodell ($K(\varphi)$) zu bilden, welches den Zusammenhang der gemessenen Intensität des vom Messfleck zurückgestrahlten Messlichts mit Veränderungen der Differenz der Beleuchtungs- und Beobachtungsrichtungen darstellt,
**dadurch gekennzeichnet, dass** die Steuerung (100) ferner dazu ausgebildet ist, die gemessenen Reflexionsfaktoren ($R_i(\lambda)$) anhand dieses Korrekturmodells ($K(\varphi)$) unter Einbezug der nominellen Beleuchtungs- und Beobachtungsrichtungen des Farbmessgeräts zu korrigieren, um die gemessenen Reflexionsfaktoren ($R_i(\lambda)$) hinsichtlich durch Abweichungen der realen Beleuchtungs- und Beobachtungsrichtungen des Farbmessgeräts von durch die Messgeometrie des Farbmessgeräts vorgegebenen nominellen Beleuchtungs- und Beobachtungsrichtungen verursachte Messwertverfälschungen zu korrigieren,
wobei die Steuerung (100) dazu ausgebildet ist, für jede paarweise Kombination von Beleuchtungs- und Beobachtungsrichtungen aus den gemessenen Reflexionsfaktoren ($R_i(\lambda)$) einen die Intensität des vom Messfleck zurückgestrahlten Messlichts repräsentierenden realen Helligkeits-Reflexionsfaktor ($R(\varphi_{ri})$) und aus den realen Helligkeits-Reflexionsfaktoren ($R(\varphi_{ri})$) anhand des Korrekturmodells ($K(\varphi)$) und der nominellen Beleuchtungs- und Beobachtungsrichtungen des Farbmessgeräts je einen nominellen Helligkeits-Reflexionsfaktor ($R(\varphi_{ni})$) zu berechnen, und
wobei die Steuerung (100) dazu ausgebildet ist, die gemessenen Reflexionsfaktoren ($R_i(\lambda)$) anhand der realen Helligkeits-Reflexionsfaktoren ($R(\varphi_{ri})$) und der nominellen Helligkeits-Reflexionsfaktoren ($R(\varphi_{ni})$) zu korrigieren.

11. Farbmessgerät nach Anspruch 10, wobei jeder reale Helligkeits-Reflexionsfaktor ($R((\varphi_{ri})$) einen Mittelwert der gemessenen Reflexionsfaktoren ($R_i(\lambda)$) für die jeweilige paarweise Kombination ($i$) von Beleuchtungs- und Beobachtungsrichtungen über alle Wellenlängen darstellt.

12. Farbmessgerät nach Anspruch 10 oder 11, **dadurch gekennzeichnet, dass** die Steuerung (100) dazu ausgebildet ist, die realen und die nominellen Beleuchtungs- und Beobachtungsrichtungen des Farbmessgeräts in Flakenormalen-Winkel ($\varphi$) zu transformieren und das Korrekturmodell ($K(\varphi)$) und die nominellen Helligkeits-Reflexionsfaktoren ($R(\varphi_{ni})$) im Raum der Flakenormalen-Winkel ($\varphi$) zu berechnen.

13. Farbmessgerät nach einem der Ansprüche 10-12, **dadurch gekennzeichnet, dass** die Steuerung (100) dazu ausgebildet ist, die nominellen Helligkeits-Reflexionsfaktoren ($R(\varphi_{ni})$) aus dem jeweiligen Residuum zwischen den realen Helligkeits-Reflexionsfaktoren ($R(\varphi_{ni})$) und dem Korrekturmodell ($K(\varphi)$) zu berechnen.

14. Farbmessgerät nach einem der Ansprüche 10-13, **dadurch gekennzeichnet, dass** die Steuerung (100) dazu ausgebildet ist, die gemessenen Reflexionsfaktoren ($R_i(\lambda)$) anhand der Differenz zwischen den realen Helligkeits-Reflexionsfaktoren ($R(\varphi_{ri})$) und den nominellen Helligkeits-Reflexionsfaktoren ($R(\varphi_{ni})$) zu korrigieren.

15. Farbmessgerät nach einem der Ansprüche 10-14, **dadurch gekennzeichnet, dass** es mindestens drei, vorzugsweise mindestens fünf Beleuchtungsanordnungen (20, 30, 40) zur Beleuchtung des Messflecks (MF) unter verschiedenen realen Beleuchtungsrichtungen (2, 3, 4) aufweist.

**Claims**

1. A color measuring method in which, by means of a color measuring device, a measuring spot (MF) of a measurement object (MO) is exposed to illumination light under at least one real illumination direction of the color measuring device and spectral reflection factors ($R_i(\lambda)$) of the measuring light reflected from the measuring spot (MF) under at least one real observation direction of the color measuring device are measured, wherein the color measuring method comprises:

forming a continuous correction model ($K(\varphi)$) from the measured reflection factors ($R_i(\lambda)$) and the real illumination and observation directions of the color measuring device, wherein the continuous correction model ($K(\varphi)$) represents the measured intensity of the measuring light reflected from the measuring spot with changes in the difference between the illumination and observation directions,

**characterized in that** the color measuring method further comprises:

correcting the measured reflection factors ($R_i(\lambda)$) based on said correction model ($K(\varphi)$), taking into account the real and nominal illumination and observation directions of the color measuring device, such that the measured reflection factors ($R_i(\lambda)$) are corrected with respect to measurement errors due to deviations of the real illumination and observation directions of the color measuring device from predetermined nominal illumination and observation directions caused by the measurement geometry of the color measuring device,
wherein, for each pairwise combination ($i$) of illumination and observation directions, a real brightness reflection factor ($R(\varphi_{ri})$) representing the intensity of the measuring light reflected from the measuring spot is calculated from the measured reflection factors ($R_i(\lambda)$),
wherein a nominal brightness reflection factor ($R(\varphi_{ni})$) is calculated from said real brightness reflection factors ($R(\varphi_{ri})$) based on the correction model ($K(\varphi)$) and the real and nominal illumination and observation directions of the color measuring device, and
wherein the measured reflection factors ($R_i(\lambda)$) are corrected based on the real brightness reflection factors ($R(\varphi_{ri})$) and the nominal brightness reflection factors ($R(\varphi_{ni})$).

2. The color measuring method according to claim 1, wherein each real brightness reflection factor ($R(\varphi_{ri})$) represents a mean value of the measured reflection factors ($R_i(\lambda)$) for the respective pairwise combination ($i$) of illumination and observation directions across all wavelengths.

3. The color measuring method according to claim 1 or 2, **characterized in that** the real and the nominal illumination and observation directions of the color measuring device are transformed into flake normal angles ($\varphi$), and **in that** the correction model ($K(\varphi)$) and the nominal brightness reflection factors ($R((\varphi_{ri})$) can be calculated in the space of the flake normal angles ($\varphi$).

4. The color measuring method according to any one of the preceding claims, **characterized in that** the nominal brightness reflection factors ($R((\varphi_{ni})$) are calculated from the respective residual between the real brightness reflection factors ($R(\varphi_{ri})$) and the correction model ($K(\varphi)$).

5. The color measuring method according to any one of the preceding claims, **characterized in that** the measured reflection factors ($R_i(\lambda)$) are corrected based on the difference between the real brightness reflection factors ($R(\varphi_{ri})$) and the nominal brightness reflection factors ($R((\varphi_{ni})$).

6. The color measuring method according to any one of the preceding claims, **characterized in that** the measuring spot (MF) of the measurement object (MO) is exposed to illumination light under at least three, preferably at least five, different real illumination directions.

7. The color measuring method according to any one of the preceding claims, **characterized in that** the measuring light reflected from the measuring spot (MF) is detected and measured under at least two different real observation directions.

8. Color measuring method according to any one of the preceding claims, **characterized in that** a uniform correction model ($K(\varphi)$) is used for all measurement geometries.

9. The color measuring method according to any one of the preceding claims, **characterized in that**, for the correction of the measured reflection factors ($R_i(\lambda)$), the real illumination and observation directions of a target color measuring device having the same measurement geometry are used as nominal illumination and observation directions.

10. A color measuring device with a measuring arrangement (MA), which comprises at least one illumination arrangement (20, 30, 40) for applying illumination light to a measuring spot (MF) of a measurement object (MO) in each of a real illumination direction (2, 3, 4) and at least one pickup arrangement (50) for detecting the measuring light reflected from the measuring spot (MF) under a real observation direction (5) and for converting said reflected measuring light into spectral reflection factors (Ri(A)), and a computer-based controller (100) for the at least one illumination arrangement and the at least one pickup arrangement and for processing the reflection factors ($R_i(\lambda)$) generated by the at least one pickup arrangement,

wherein the controller (100) is configured to form a continuous correction model ($K(\varphi)$), which represents the measured intensity of the measuring light reflected from the measuring spot with changes in the difference between the illumination and observation directions of the color measuring device, from the measured reflection factors ($R_i(\lambda)$) and the real illumination and observation directions of the color measuring device,

**characterized in that** the controller (100) is further configured to correct the measured reflection factors ($R_i(\lambda)$) based on said correction model ($K(\varphi)$), taking into account the real and nominal illumination and observation directions of the color measuring device, in order to correct the measured reflection factors ($R_i(\lambda)$) with respect to measurement errors due to deviations of the real illumination and observation directions of the color measuring device from predetermined nominal illumination and observation directions caused by the measurement geometry of the color measuring device,

wherein the controller (100) is further configured to calculate a real brightness reflection factor ($R(\varphi_{ri})$) representing the intensity of the measuring light reflected from the measuring spot from the measured reflection factors ($R_i(\lambda)$), and to calculate, in each case, a nominal brightness reflection factor ($R(\varphi_{ni})$) from the real brightness reflection factors ($R(\varphi_{ri})$) based on the correction model ($K(\varphi)$) and the nominal illumination and observation directions of the color measuring device, for each pairwise combination of illumination and observation directions, and

wherein the controller (100) is configured to correct the measured reflection factors ($R_i(\lambda)$) based on the real brightness reflection factors ($R(\varphi_{ri})$) and the nominal brightness reflection factors ($R(\varphi_{ni})$).

11. The color measuring device according to claim 10, wherein each real brightness reflection factor ($R(\varphi_{ri})$) represents a mean value of the measured reflection factors ($R_i(\lambda)$) for the respective pairwise combination ($i$) of illumination and observation directions across all wavelengths.

12. The color measuring device according to claim 10 or 11, **characterized in that** the controller (100) is configured to transform the real and the nominal illumination and observation directions of the color measuring device into flake normal angles ($\varphi$), and to calculate the correction model ($K(<p)$) and the nominal brightness reflection factors ($R(\varphi_{ri})$) in the space of the flake normal angles ($\varphi$).

13. The color measuring device according to any one of claims 10-12, **characterized in that** the controller (100) is configured to calculate the nominal brightness reflection factors ($R(\varphi_{ni})$) from the respective residual between the real brightness reflection factors ($R(\varphi_{ni})$) and the correction model ($K(\varphi)$).

14. The color measuring device according to any one of claims 10-13, **characterized in that** the controller (100) is configured to correct the measured reflection factors ($R_i(\lambda)$) based on the difference between the real brightness reflection factors ($R(\varphi_{ri})$) and the nominal brightness reflection factors ($R(\varphi_{ni})$).

15. The color measuring device according to any one of claims 10-14, **characterized in that** it has at least three, preferably at least five illumination arrangements (20, 30, 40) for illuminating the measuring spot (MF) under different real illumination directions (2, 3, 4).

**Revendications**

1. Procédé de mesure de la couleur, dans lequel un point de mesure (MF) d'un objet de mesure (MO) est exposé à une lumière d'éclairage à l'aide d'un colorimètre sous au moins une direction d'éclairage réelle du colorimètre, et des facteurs de réflexion spectraux ($R_i(\lambda)$) du point de mesure (MF) sont mesurés sous au moins une direction d'observation réelle de la lumière de mesure réfléchie par le colorimètre, dans lequel le procédé de mesure de couleur comprend :

la formation d'un modèle de correction continue ($K(\varphi)$) à partir des facteurs de réflexion mesurés ($R_i(\lambda)$) et des directions réelles d'éclairage et d'observation du colorimètre, dans lequel le modèle de correction continue ($K(\varphi)$) représente la relation entre l'intensité mesurée de la lumière réfléchie par le point de mesure et les variations de la différence entre les directions d'éclairage et d'observation,

**caractérisé en ce que** le procédé de mesure de couleur comprend également :

la correction des facteurs de réflexion mesurés ($R_i(\lambda)$) à l'aide de ce modèle de correction ($K(\varphi)$) en tenant compte des directions d'éclairage et d'observation réelles et nominales du colorimètre, de sorte que les facteurs de réflexion mesurés ($R_i(\lambda)$) sont

corrigés par rapport aux distorsions des valeurs mesurées provoquées par les écarts entre les directions d'éclairage et d'observation réelles du colorimètre et les directions d'éclairage d'observation nominales prédéfinies par la géométrie de mesure du colorimètre,

dans lequel pour chaque combinaison par paire ($i$) de directions d'éclairage et d'observation, un facteur de réflexion de luminosité réel ($R_i(\varphi)$) représentant l'intensité de la lumière de mesure réfléchie par le point de mesure est calculé à partir des facteurs de réflexion mesurés ($R(\varphi_{ri})$),

dans lequel un facteur de réflexion de luminosité nominal ($R(\varphi_{ni})$) est calculé à partir de ces facteurs de réflexion de luminosité réels ($R(\varphi_{ri})$) à l'aide du modèle de correction ($K(\varphi)$) et des directions d'éclairage et d'observation réelles et nominales du colorimètre, et

dans lequel les facteurs de réflexion mesurés ($R_i(\lambda)$) sont corrigés sur la base des facteurs de réflexion de luminosité réels ($R(\varphi_{ri})$) et des facteurs de réflexion de luminosité nominaux ($R((\varphi_{ni}))$) .

2. Procédé de mesure de la couleur selon la revendication 1, dans lequel chaque facteur de réflexion de luminosité réel ($R(\varphi_{ri})$) représente une moyenne des facteurs de réflexion mesurés ($R_i(\lambda)$) pour la combinaison par paire respective ($i$) de directions d'éclairage et d'observation sur toutes les longueurs d'onde.

3. Procédé de mesure de la couleur selon la revendication 1 ou 2, **caractérisé en ce que** les directions réelle et nominale d'éclairage et d'observation du colorimètre sont transformées en angles normaux d'éclat ($\varphi$), et que le modèle de correction ($K(\varphi)$) et les facteurs de réflexion de luminosité nominaux ($R(\varphi_{ri})$) sont calculés dans l'espace des angles normaux d'éclats ($\varphi$).

4. Procédé de mesure de la couleur selon l'une des revendications précédentes, **caractérisé en ce que** les facteurs de réflexion de luminosité nominaux ($R(\varphi_{ni})$) sont calculés avec le résidu respectif entre les facteurs de réflexion de luminosité réels ($R(\varphi_{ri})$) et le modèle de correction ($K(\varphi)$) .

5. Procédé de mesure de la couleur selon l'une des revendications précédentes, **caractérisé en ce que** les facteurs de réflexion de luminosité mesurés ($R_i(\lambda)$) sont corrigés sur la base de la différence entre les facteurs de réflexion de luminosité réels ($R(\varphi_{ri})$) et les facteurs de réflexion de luminosité nominaux ($R(\varphi_{ni})$).

6. Procédé de mesure de la couleur selon l'une des revendications précédentes, **caractérisé en ce que** le point de mesure (MF) de l'objet de mesure (MO) est exposé à une lumière d'éclairage sous au moins trois, de préférence au moins cinq, directions d'éclairage réelles différentes.

7. Procédé de mesure de la couleur selon l'une des revendications précédentes, **caractérisé en ce que** la lumière de mesure réfléchie par le point de mesure (MF) est détectée et mesurée sous au moins deux directions d'observation réelles différentes.

8. Procédé de mesure de la couleur selon l'une des revendications précédentes, **caractérisé en ce qu'**un modèle de correction uniforme ($K(\varphi)$) est utilisé pour toutes les géométries de mesure.

9. Procédé de mesure de la couleur selon l'une des revendications précédentes, **caractérisé en ce que** pour la correction des facteurs de réflexion mesurés ($R_i(\lambda)$), les directions réelles d'éclairage et d'observation d'un colorimètre cible de même géométrie de mesure sont utilisées comme directions nominales d'éclairage et d'observation.

10. Colorimètre avec un dispositif de mesure (MA), qui comporte au moins un dispositif d'éclairage (20, 30, 40) pour appliquer une lumière d'éclairage à un point de mesure (MF) d'un objet de mesure (MO) dans chaque direction d'éclairage réelle (2, 3, 4) et au moins un dispositif de capture (50) pour détecter la lumière de mesure réfléchie par le point de mesure (MF) sous une direction d'observation réelle (5) et pour la convertir en facteurs de réflexion spectraux ($R_i(\lambda)$) ainsi qu'une commande informatisée (100) pour l'au moins un dispositif d'éclairage et l'au moins un dispositif de capture et pour traiter les facteurs de réflexion ($R_i(\lambda)$) générés par l'au moins un dispositif de capture,

dans lequel la commande (100) est conçue pour former un modèle de correction continue ($K(\varphi)$) à partir des facteurs de réflexion mesurés ($R_i(\lambda)$) et des directions réelles d'éclairage et d'observation du colorimètre, lequel représente la relation entre l'intensité mesurée de la lumière réfléchie par le point de mesure et les variations de la différence entre les directions d'éclairage et d'observation,

**caractérisé en ce que** la commande (100) est en outre conçue pour corriger les facteurs de réflexion mesurés ($R_i(\lambda)$) à l'aide de ce modèle de correction ($K(\varphi)$) en tenant compte des directions d'éclairage et d'observation nominales du colorimètre, afin de corriger les facteurs de réflexion mesurés ($R_i(\lambda)$) par rapport aux distorsions des valeurs mesurées provoquées par les écarts entre les directions d'éclairage et d'observation réelles du colorimètre et les directions d'éclairage d'observation nominales prédéfinies par la géométrie de mesure du colorimètre, dans lequel la commande (100) est conçue pour calculer, pour chaque combinaison par paire de directions d'éclairage et d'observation, à partir des facteurs de réflexion mesurés ($R_i(\lambda)$) un facteur de réflexion de luminosité réel ($R(\varphi_{ni})$) représentant l'intensité de la lumière de mesure renvoyée par le point de mesure et pour calculer, à partir des facteurs de réflexion de luminosité réels ($R(\varphi_{ri})$), à l'aide du modèle de correction ($K(\varphi)$) et des directions d'éclairage et d'observation nominales du colorimètre, respectivement, un facteur de réflexion de luminosité nominal ($R(\varphi_{ni})$), et

dans lequel la commande (100) est conçue pour corriger les facteurs de réflexion mesurés ($R_i(\lambda)$) sur la base des facteurs de réflexion de luminosité réels ($R(\varphi_{ri})$) et des facteurs de réflexion de luminosité nominaux ($R(\varphi_{ni})$).

11. Colorimètre selon la revendication 10, dans lequel chaque facteur de réflexion de luminosité réel ($R(\varphi_{ni})$) représente une moyenne des facteurs de réflexion mesurés ($R_i(\lambda)$) pour la combinaison par paire respective (*i*) de directions d'éclairage et d'observation sur toutes les longueurs d'onde.

12. Colorimètre selon la revendication 10 ou 11, **caractérisé en ce que** la commande (100) est conçue pour transformer les directions réelle et nominale d'éclairage et d'observation du colorimètre en angles normaux d'éclat ($\varphi$), et pour calculer le modèle de correction ($K(\varphi)$) et les facteurs de réflexion de luminosité nominaux ($R(\varphi_{ni})$) dans l'espace des angles normaux d'éclats ($\varphi$).

13. Colorimètre selon l'une des revendications 10 à 12, **caractérisé en ce que** la commande (100) est conçue pour calculer les facteurs de réflexion de luminosité nominaux ($R(\varphi_{ni})$) à partir du résidu respectif entre les facteurs de réflexion de luminosité réels ($R(\varphi_{ni})$) et le modèle de correction ($K(\varphi)$).

14. Colorimètre selon l'une des revendications 10 à 13, **caractérisé en ce que** la commande (100) est conçue pour calculer les facteurs de réflexion mesurés ($R_i(\lambda)$) sur la base de la différence entre les facteurs de réflexion de luminosité réels ($R(\varphi_{ni})$) et les facteurs de réflexion de luminosité nominaux ($R(\varphi_{ni})$).

15. Colorimètre selon l'une des revendications 10 à 14, **caractérisé en ce qu'**il comprend au moins trois, de préférence au moins cinq dispositifs d'éclairage (20, 30, 40) pour éclairer le point de mesure (MF) sous différentes directions d'éclairage réelles (2, 3, 4).

Fig. 1

Fig. 2

**Fig. 3**

**Fig. 5**

**Fig. 4**

18

**210** — Bestimmung der realen Beleuchtungs- und Beobachtungsrichtungen aller Messkanäle i des Farbmessgeräts

**220** — Messung der Spektren $R_i(\lambda)$ für alle Messkanäle i

**230** — Berechnung der realen Flakenormalen-Winkel $\varphi_{ri}$ aus den realen Beleuchtungs- und Beobachtungsrichtungen aller Messkanäle i

**240** — Berechnung der mittleren realen Reflexionsfaktoren $R(\varphi_{ri})$ für alle Messkanäle i

**250** — Bestimmung der Korrekturfunktion $K(\varphi)$ anhand der realen Flakenormalen-Winkel $\varphi_{ri}$ und der realen Reflexionsfaktoren $R(\varphi_{ri})$

**260** — Berechnung der nominellen Flakenormalen-Winkel $\varphi_{ni}$ aus den nominellen Beleuchtungs- und Beobachtungsrichtungen aller Messkanäle i

**270** — Berechnung der nominellen Reflexionsfaktoren $R(\varphi_{ni})$ anhand der Korrekturfunktion $K(\varphi)$ und der nominellen Flakenormalen-Winkel $\varphi_{ni}$

**280** — Korrektur der Spektren $R_i(\lambda)$ anhand der realen Reflexionsfaktoren $R(\varphi_{ri})$ und der nominellen Reflexionsfaktoren $R(\varphi_{ni})$

**Fig. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2703789 A1
- EP 2728342 A1
- US 4711580 A
- US 20110143017 A1
- EP 1914529 A1
- US 6707553 B1

### In der Beschreibung aufgeführte Nicht-Patentliteratur

- **WILHELM H. KETTLER.** Geräteprofilierung: Management globaler Farbkonsistenz. *DFO Tagung Qualitätssicherung und Prüfverfahren,* 2008
- **WILHELM H. KETTLER.** Seminare Modul 2: Tiefere Einblicke in die Farbmetrik. Farbe und Lack, 25. Juni 2014
- **ERIC KIRCHNER ; WERNER CRAMER.** Making sense of measurement geometries for multi-angle spectrophotometers. *Color Research & Application,* 2012, vol. 37 (3), 186-198